# EUROPEAN PATENT APPLICATION

(11) **EP 4 183 815 A1**
(43) Date of publication of application: **24.05.2023**
(21) Application number: 21306625.1
(22) Date of filing: 22.11.2021
(51) Int. Cl.: C08G 73/02, B27N 3/00, C09J 189/00

(54) **ADHESIVE COMPOSITION COMPRISING GROUND PEA SEEDS AND AN AMINE-BASED AZETIDINIUM-FUNCTIONAL CROSS-LINKER**

(71) Applicant: EVERTREE, 60280 Venette (FR)
(72) Inventor: The designation of the inventor has not yet been filed
(74) Representative: Santarelli

(57) **Abstract**

The invention relates to an adhesive composition comprising:
- ground pea seeds,
- an amine-based azetidinium-functional cross-linker, and
- water.

The invention also relates to an article and its preparation process, use of the adhesive composition according to the invention, and use of ground pea seeds.

## Description

The present invention relates to an adhesive composition comprising:
- ground pea seeds,
- an amine-based azetidinium-functional cross-linker, and
- water.

The present invention also relates to an article and its preparation process, use of the adhesive composition according to the invention, and use of ground pea seeds. Adhesive compositions are extensively used in the industry, in particular, the lignocellulosic or wood product industry, to make lignocellulosic-based composites.

For example, WO2011156380 describes an adhesive composition comprising a reactive prepolymer and ground plant meal.

However, the adhesive composition obtained usually have a high viscosity, which may result in processability problems, for example by preventing its use for applications such as injection or efficiently brought *via* other application equipment like rollers or brushes. Indeed, the adhesive must have a sufficiently low viscosity to be injected through nozzles or atomizers or applied *via* rollers.

Nonetheless, the adhesive composition should maintain a high solid content to limit the excess of water added to the lignocellulosic material to be glued. Indeed, excess of water may have negative effects on the pressing or curing step and on the properties of the resulting product.

Therefore, there is a need for improving processability of eco-friendly adhesive compositions, in particular by decreasing its viscosity, without compromising the final properties of the article made therefrom. Furthermore, there is a need for improving processability of these adhesive compositions without decreasing the solid content.

The inventors have surprisingly found that using ground pea seeds in an adhesive composition improves the processability of the resulting adhesive composition, while allowing to maintain a high solid content in the adhesive composition.

Furthermore, the inventors have surprisingly found that an adhesive composition comprising a combination of ground pea seeds with an amine-based azetidinium-functional cross-linker makes it possible to obtain lignocellulosic-based composites (e.g., wood-based panels) having excellent adhesive properties. In addition, this combination leads to adhesive compositions having a fast curing time, which makes it possible to use them in the manufacture of wood-based panels obtained with short pressing times, such as oriented strand boards, plywood or particleboards. Such an adhesive composition can also be used as a wood laminate adhesive for wood veneer applications.

Therefore, the invention relates to an adhesive composition comprising:
- ground pea seeds,
- an amine-based azetidinium-functional cross-linker, and
- water.

By "ground pea seeds", it is meant whole or split pea seeds, which can be dehulled or partially dehulled, and have been ground into powder. Said seeds have not been submitted to any further transformation steps such as an extraction, a fractionation and/or a grafting step(s). Preferably, the seeds have not been submitted to heat treatment at a temperature of at least 135°C, more preferably, at least 110°C, even more preferably, at least 80°C. As an example of an extraction step, no fat, no starch, nor protein extraction is performed. Therefore, ground pea seeds are not pea starch isolate, pea protein isolate, pea starch concentrate nor pea protein concentrate.

Using these ground pea seeds has the advantage of simplifying the preparation of an adhesive composition, since no extraction or fractionation of the pea seed is necessary such as to obtain, for example, starch or protein concentrates or isolates, which have previously been described for preparing bio-based adhesive compositions. Furthermore, an adhesive composition can be provided without having to modify the ground pea seeds, for example by an additional grafting step. Therefore, the production costs to prepare an adhesive composition are reduced.

In addition, the ground pea seeds have the further advantage of having a lighter color (light yellow) than meals obtained from certain oleaginous plants (brown) such as sunflower seed or rapeseed meals, which will not affect the color of the final product.

Preferably, the ground pea seeds implemented in the adhesive composition according to the present invention belong to the genus *Pisum* and/or *Lathyrus.* More preferably, the seeds belong to the genus *Pisum.*

Preferably, the seeds belong to the species *Pisum sativum* and/or *Lathyrus aphaca,* more preferably, *Pisum sativum* (such as *Pisum sativum* L. known as yellow pea). Advantageously, the ground pea seeds are micronized and optionally sieved pea seeds. By "micronized", it is meant that the seeds have been ground to a particle size of at most 1000 µm.

Micronization can be carried out using a pin mill, an attrition mill, an impact mill or a hammer mill.

Advantageously, micronization is followed by a sieving step to obtain the desired particle size of the ground pea seeds.

Preferably, the ground pea seeds have a granulometry Dv50 comprised between 1 µm and 1000 µm, more preferably, between 1 µm and 500 µm, even more preferably, between 1 µm and 200 µm, most preferably, between 20 µm and 90 µm, for example about 25 µm.

It will be noted that in the context of the present application, and unless otherwise stipulated, the ranges of values indicated are understood to be inclusive.

By "about" a value, it is meant said value plus or minus 10%.

Preferably, the ground pea seeds have a granulometry Dv90 comprised between 10 µm and 1500 µm, more preferably, between 25 µm and 500 µm, even more preferably, between 50 µm and 150 µm, for example about 77 µm.

In a preferred embodiment, the ground pea seeds have a granulometry Dv50 comprised between 1 µm and 200 µm, preferably, between 20 µm and 90 µm, and a granulometry Dv90 comprised between 25 µm and 500 µm, preferably, between 50 µm and 150 µm. The granulometry Dv50 and Dv90 are well-known by the skilled person respectively as the maximum size of 50%, or 90%, of the smallest particles in volume, and can be measured with a granulometer, for example according to the method described in Example 1 "Particle size determination".

Advantageously, the ground pea seeds comprise between 5 w% and 40 w% of crude proteins, preferably, between 10 w% and 30 w%, more preferably, between 15 w% and 25 w%, on the total weight of the ground pea seeds.

The crude protein content of the ground pea seeds can be measured following the Kjeldahl procedure (NF EN ISO 5983-2 : 2009) with a nitrogen-to-protein conversion factor of 6.25. Advantageously, the ground pea seeds comprise between 0.1 w% and 20 w% of oil, preferably, between 0.5 w% and 12 w%, more preferably, between 0.7 w% and 5 w% even more preferably, between 1.0 w% and 2.0 w%, on the total weight of the ground pea seeds.

The oil content of the ground pea seeds can be measured following the procedure as set forth in Example 1, i.e. by extracting oil with a Soxhlet extractor using n-hexane as solvent, then, separating the hexane from oil by using a rotary evaporator at 68°C. Advantageously, the ground pea seeds comprise between 70 w% and 30 w% of starch, preferably between 60 w% and 40 w% more preferably between 55 w% and 45 w%, on the total weight of the ground pea seeds.

The starch content of the ground pea seeds can be measured following the procedure as set forth in Example 1, i.e. after amylolysis and using HPAEC (High Performance Anion Exchange Chromatography with Pulsed Amperometric detection) Analyses. Advantageously, the ground pea seeds have a water (moisture) content comprised between 1 w% and 20 w%, preferably between 1 w% and 15 w%, more preferably, between 3 w% and 10 w%, on the total weight of the ground pea seeds.

By "amine-based azetidinium-functional cross-linker", it is meant a cross-linker comprising amine and azetidinium groups.

By "cross-linker", it is meant a compound or mixture of compounds comprising reactive groups.

Advantageously, the amine-based azetidinium-functional cross-linker implemented in the adhesive composition according to the invention is a polyamidoamine-epichlorohydrin (PAE), a polyalkylenepolyamine-epichlorohydrin (PAPAE), an amine polymer-epichlorohydrin (APE), or a combination thereof.

More preferably, the amine-based azetidinium-functional cross-linker is a polyamidoamine-epichlorohydrin (PAE).

Advantageously, the adhesive composition according to the invention does not comprise a formaldehyde-based prepolymer.

By "formaldehyde-based prepolymer", it is meant a prepolymer or mixture of prepolymers obtained from at least one monomer being formaldehyde.

Preferably, the adhesive composition according to the invention does not comprise a urea-formaldehyde resin, a melamine-formaldehyde resin, a melamine urea-formaldehyde resin, a phenol-formaldehyde resin, a phenol-resorcinol-formaldehyde, or a combination thereof, more preferably, the adhesive composition does not comprise a urea-formaldehyde resin, a phenol-formaldehyde resin, or a combination thereof. Advantageously, the weight ratio of the ground pea seeds / amine-based azetidinium-functional cross-linker (dry weight / dry weight) is comprised between 0.5 and 30, preferably between 1 and 20, more preferably, between 1 and 10, even more preferably, between 3 and 6.

Advantageously, the adhesive composition according to the invention comprises between 5 wt% and 60 wt% of the ground pea seeds, based on the total weight of the adhesive composition, preferably, between 15 wt% and 50 wt%, more preferably, between 20 wt% and 40 wt%, based on the total weight of the adhesive composition.

Advantageously, the adhesive composition according to the invention comprises between 2 wt% and 12 wt% of the amine-based azetidinium-functional cross-linker, based on the total weight of the adhesive composition, preferably, between 5 wt% and 9 wt%, based on the total weight of the adhesive composition.

Advantageously, the adhesive composition according to the invention has a solid content of at least 20 wt%, preferably, at least 30 wt%, more preferably, at least 35 wt%, even more preferably, at least 40 wt%, based on the total weight of the adhesive composition.

By "solid content" of the adhesive composition, it is meant the percentage of dry solids contained in said composition. For example, if a composition is prepared by mixing ground pea seeds and water, the residual water already contained the ground pea seeds (*i.e.,* the water content of the ground pea seeds) is taken into consideration for calculating the solid content of the composition.

Advantageously, the adhesive composition according to the invention has a solid content comprised between 20 wt% and 60 wt%, preferably, comprised between 25 wt% and 55 wt%, more preferably, comprised between 30 wt% and 50 wt%, even more preferably, comprised between 35 wt% and 50 wt%, based on the total weight of the adhesive composition.

In a particular embodiment, the adhesive composition according to the invention further comprises a polyol.

Advantageously, this polyol is selected from the group consisting of glycerol (or crude vegetable glycerin), propylene glycol, ethylene glycol, alkyl and aryl derivatives of glycerol, alkyl and aryl derivatives of propylene glycol, alkyl and aryl derivatives of ethylene glycol, glucose, fructose, sorbitol, isosorbide, maltitol, mannitol, and erythritol, and/or from the group consisting of oligomers and polymers of any of the earlier listed monomers such as polyglycerols, polyethylene glycols (PEG) polypropylene glycols (PPG), glucose syrups, maltodextrins, dextrins, and modified starches. Other non-volatile hydroxylated compounds may also be used.

Preferably, the polyol is a trifunctional alcohol (*i.e.,* a compound containing three hydroxyl groups). Preferably, any polyol present in the adhesive composition according to the invention is not of petroleum origin.

More preferably, the polyol present in the adhesive composition according to the invention is glycerol or crude vegetable glycerin.

One benefit of using glycerol and various low-viscosity polyols is that they allow less water to be used in the adhesive composition. It allows to further increase the solid content of an adhesive composition. Reducing the amount of water, while retaining a low-viscosity adhesive composition, desirably reduces the risk that the composite formed therefrom is damaged by steam generated during formation of the composite at high temperature.

In this particular embodiment, the weight ratio of polyol / amine-based azetidinium-functional cross-linker (dry weight / dry weight) is advantageously comprised between 0.4 and 10, preferably, between 0.8 and 8, more preferably, between 1.5 and 6, even more preferably, between 3 and 5.

In this particular embodiment, the weight ratio of polyol / ground pea seeds (dry weight / dry weight) is advantageously comprised between 0.1 and 5, preferably, between 0.3 and 3, more preferably, between 0.5 and 2, even more preferably, between 0.7 and 1.2.

In this particular embodiment, the adhesive composition advantageously comprises between 5 wt% and 60 wt% of the polyol, preferably, between 10 wt% and 40 wt%, more preferably, between 15 wt% and 30 wt%, based on the total weight of the adhesive composition.

Advantageously, the pH of the adhesive composition is comprised between 3 and 12, preferably, between 5 and 11, more preferably, between 5 and 9. In particular, the pH of the adhesive composition is adjusted depending on the optimum pH of the amine-based azetidinium-functional cross-linker. For example, the pH of an adhesive composition comprising PAE is preferably about 8.

Advantageously, the adhesive composition has a viscosity at 20°C of less than 2000 mPa.s, preferably, of less than 1500 mPa.s, more preferably, of less than 1050 mPa.s, even more preferably, of less than 900 mPa.s.

According to a preferred embodiment, the adhesive composition has the above-described viscosity and a solid content comprised between 20 wt% and 60 wt%, preferably, comprised between 25 wt% and 55 wt%, more preferably, comprised between 30 wt% and 50 wt%, even more preferably, comprised between 35 wt% and 50 wt%, based on the total weight of the adhesive composition.

The skilled person knows how to measure viscosity. Preferably, the viscosity can be measured as described in Example 1 (Rheological analysis).

Furthermore, all the viscosity measurements are done less than 15 min after stopping mixing the components of the adhesive composition.

In a particular embodiment, the adhesive composition according to the invention may comprise no additional additive. In other words, the adhesive composition according to the invention consists of:
- ground pea seeds,
- an amine-based azetidinium-functional cross-linker, and
- water.

Alternatively, the adhesive composition according to the invention may further comprise at least one additive.

In particular, said at least one additive is selected from the group consisting of:
- fillers, preferably nanofillers, such as calcium carbonate, clay or nanoclay (e.g. montmorillonite, bentonite) such as those sold under the trade names CLOISITE^{®} Na+, CLOISITE^{®}30B, CLOISITE^{®}20A, CLOISITE^{®}10A, natural biopolymers such as chitosan or cellulose, or metal such as silver, copper or gold,
- non-wood fibers, for example glass, carbon or aramid fibers,
- thickeners or texturizing agents, such as corn flour, wheat starch, olive kernel flour,
- gelling agents,
- surfactants such as siloxanes,
- antioxidants such as polyphenols,
- antifoaming agents,
- antimicrobial agents such as oxidants, nisin,
- antibacterial agents such as nitrogen derivatives,
- fungicides such as sulphur-containing products,
- preservatives such as citric acid, paraben,
- pigments such as mineral pigments, e.g., carbon black,
- agents improving moisture resistance or water-repellent agents such as wax,
- pH modulators such as a base (*e.g.,* NaOH) or an acid (*e.g.,* HCl), preferably, an alkali hydroxide (*e.g.*, sodium hydroxide or calcium hydroxide) or an alkali metal salt of a carboxylate organic compound (*e.g.*, an alkali metal salt of citrate, such as di-sodium citrate), more preferably, an alkali hydroxide such as sodium hydroxide,
- anti-adhesive (*e.g.*, processing aids type stearate) or composite release agents, and
- fire-resistant or fire-retardant agents such as ammonium polyphosphates.

Preferably, this at least one additive is a pH modulator as described above, in particular, an alkali hydroxide such as sodium hydroxide.

In certain embodiments, the adhesive composition does not comprise any metal oxide. In particular, the adhesive composition does not comprise a metal oxide chosen from MgO, ZnO, TiO₂, Fe₂O₃, Al₂O₃, SiO₂, or a mixture thereof.

The adhesive composition may be provided under a two-part form, wherein one part comprises the amine-based azetidinium-functional cross-linker, water and optionally a polyol, and the other part comprises the ground pea seeds.

Preferably, upon curing, the adhesive composition forms a solid binder.

Advantageously, the adhesive composition according to the invention is sprayable.

In a specific embodiment, the adhesive composition consists of:
- ground pea seeds,
- an amine-based azetidinium-functional cross-linker,
- water, and
- optionally a polyol and/or at least one additive.

The ground pea seeds, the amine-based azetidinium-functional cross-linker, and the optional polyol and/or the at least one optional additive are as described above. In particular, the optional polyol is preferably glycerol or crude vegetable glycerin, and the optional at least one additive is preferably an alkali hydroxide such as sodium hydroxide or an alkali metal hydroxide.

Contrary to the term "comprising", it is understood that the terms "consisting of" exclude the presence of any other additional compound.

In a first aspect, the invention also relates to a process for preparing the adhesive composition according to the invention as described above comprising the steps of:
- dispersing the ground pea seeds in water, and
- adding the amine-based azetidinium-functional cross-linker.

In a second aspect, the invention also relates to a process for preparing the adhesive composition according to the invention comprising the steps of:
- blending the amine-based azetidinium-functional cross-linker and optionally the polyol with water, and
- adding the ground pea seeds.

The process according to the second aspect is preferred when the adhesive composition comprises a polyol.

When the adhesive composition according to the present invention comprises at least one additive as previously defined, the skilled person will know at which step and how the latter is to be introduced depending on its chemical characteristics.

Advantageously, the processes according to the first and second aspects further comprise a step of adjusting pH with a pH modulator as described above, preferably until the adhesive composition reaches a pH as described above. Preferably, the step of adjusting pH is carried out after adding the amine-based azetidinium-functional cross-linker according to the first aspect, or after adding the ground pea seeds according to the second aspect.

Advantageously, these processes further comprise a mixing step until obtaining a homogeneous adhesive composition. Preferably, this mixing step is carried out after the step of adjusting pH, when this adjusting step is implemented.

In addition, the invention relates to an article comprising the adhesive composition according to the invention and a lignocellulosic material.

By "lignocellulosic material", it is meant a lignocellulosic material different from the ground pea seeds, in particular straw, paper, cardboard, wood strands, wood veneer, wood particles and/or wood board, preferably, wood strands, wood veneer, wood particles and/or wood board, more preferably, wood strands and/or wood particles. The wood particles can be chips, flakes, wafer, sawdust, powder or any other waste based on wood originating from a sawmill, preferably, chips, flakes or wafer.

Preferably, the wood is recycled wood (*i.e.,* a mixture of wood from different sources), oak or coniferous wood such as pine wood and/or spruce wood.

Preferably, the article is a wood board, more preferably, the article is plywood, veneered board, oriented strand board (OSB) or particleboard such as flakeboard, chipboard or waferboard, even more preferably, the article is plywood, veneered board or particleboard. Preferably, the veneered board is veneered plywood, veneered OSB, veneered fiberboard or veneered particleboard such as veneered flakeboard, veneered chipboard or veneered waferboard, more preferably, the veneered board is veneered particleboard or veneered fiberboard.

In the specific embodiment wherein the article is a particleboard, the adhesive composition according to the invention preferably comprises a polyol as described above.

In another specific embodiment, when the adhesive composition according to the invention is used as a laminated adhesive for wood veneer application, then it preferably does not comprise a polyol such as described above.

The invention further relates to a process for preparing the article according to the invention, comprising a step of contacting the adhesive composition according to the invention with a lignocellulosic material to provide lignocellulosic material impregnated with the adhesive composition.

By "contacting" the adhesive composition with a lignocellulosic material, it is meant preferably applying by brush or roller, mixing or spraying, more preferably, applying by brush or roller or mixing. Indeed, the viscosity of the adhesive composition is sufficiently low to allow the spraying of the composition.

Advantageously, the process for preparing the article further comprises a pressing step of the lignocellulosic material impregnated with the adhesive composition. Preferably, the pressing time is comprised between 4 s/mm and 50 s/mm, more preferably, between 6 s/mm and 30 s/mm, even more preferably, between 8 s/mm and 15 s/mm, the pressing time being expressed in seconds per thickness of the lignocellulosic material in millimeters. Preferably, the process for preparing the article further comprises both the curing and pressing steps described before.

Advantageously, the process for preparing an article further comprises a step of curing the adhesive composition. Preferably, the curing is implemented by heating at a curing temperature comprised between 60°C and 250°C, more preferably, between 80°C and 230°C, even more preferably, between 105°C and 210°C.

More preferably, the curing and pressing steps are performed simultaneously.

Even more preferably, the article is provided after placing the lignocellulosic material impregnated with the adhesive composition into a mold, followed by pressing and heating at the curing temperature described before; or alternatively, after applying another lignocellulosic material onto the lignocellulosic material impregnated with the adhesive composition, followed by pressing and heating at the curing temperature described before. The article, the adhesive composition and the lignocellulosic material are as described above.

The invention also relates to the use of the adhesive composition according to the invention to prepare an article comprising a lignocellulosic material.

The adhesive composition, the lignocellulosic material and the article are as described above.

In addition, the invention relates to the use of the adhesive composition according to the invention to glue wood veneer.

Wood veneer is a thin layer of wood that is usually applied over another material called a substrate. Woodworkers use these thin sheets of wood for any number of reasons. The point is to provide an inexpensive supporting panel with a sophisticated surface and thus refine it. This surface consists of thin layers of natural wood with a thick ness of typically 0.5 mm to 0.9 mm.

The furniture, wall or flooring panels or the like manufactured from such panels thus appear to be of a higher value because the observer, due to the natural grain of the veneers, gets the impression of precious massive wood, which is much more expensive compared to the supporting panel. In addition, such surfaces are more pleasant to look at.

For the protection of the surface, which is only formed of natural wood on the surface, against dirt, damage and dust entering the pores of the veneer, the veneered panel is provided with a varnish layer, which, incidentally, can be visually and tactually attractive. The panel-producing industry presses the veneers supplied onto chipboards, plywood, particle boards, HDF boards, MDF boards or multiplex boards. The paper laminates are manufactured by gluing decor paper with melamine urea formaldehyde (MUF) resin or urea formaldehyde (UF) resin.

The veneer pressing machines used in the panel-producing industry for pressing veneers onto panels are designed at a temperature of 95° to 140°C. The decorative face and back veneers are generally made of hardwood such as maple, oak, cherry, and birch. Sometimes, they are also made from cone-bearing wood (softwood) such as pine or cypress or cedar because they lend an attractive appearance.

Finally, the invention also relates to the use of ground pea seeds for improving processability of an adhesive composition comprising an amine-based azetidinium-functional cross-linker.

The ground pea seeds are as described above.

Preferably, the processability is improved by decreasing viscosity of the adhesive composition.

By "decreasing the viscosity of the adhesive composition", it is meant that the viscosity of the adhesive composition comprising the ground pea seeds is inferior to the same adhesive composition (i.e. at the same dry matter content) not comprising said ground pea seeds (i.e. ground pea seeds being replaced by other ground plant seeds or by processed, e.g. protein or starch extracted from ground pea seeds). By "inferior to", it is meant a decrease of viscosity of preferably at least 20%.

More preferably, the processability is improved by decreasing the viscosity at 20°C of the adhesive composition to less than 2000 mPa.s, preferably, to less than 1500 mPa.s, more preferably, to less than 1050 mPa.s and even more preferably, to less than 900 mPa.s.

The invention will be better understood in the light of the following examples, given by way of illustration, with reference to:
- Figure 1 that is a diagram illustrating the viscosity of dispersions prepared from water and micronized plant seed resources (pea flour, referred to as "PF"; sunflower meal, "SM"; heat treated sunflower meal, "HT-SM"; soy flour, "SF1" and rapeseed meal, "RM"), depending on the dry content of the dispersions;
- Figure 2 that are diagrams illustrating the mechanical properties of particle boards glued with UF resin (grey) or PFG1 adhesive (black) and pressed at different press factors;
- Figure 3 that are diagrams illustrating the mechanical properties of particle boards prepared with PFG1, SF1 or SF2 adhesive compositions and pressed at different press factors;
- Figure 4 that shows picture of pea seeds (A) and sunflower seeds (B) after grinding.

### Example 1: Materials and methods

### Materials

Whole yellow pea seeds (*Pisum sativum*), hexane-extracted sunflower meal, hexane-extracted rapeseed meal and hexane-extracted soybean meal were purchased from Sanders (France) and ground in order to respectively obtain micronized pea flour (PF) with a diameter of Dv10- of 7 µm, Dv-50- of 25 µm, and Dv90 of 77 µm; micronized sunflower meal (SM) with a diameter of Dv10 of 5 µm, Dv50 of 30 µm, and Dv90 of 427 µm; micronized rapeseed meal (RM) with a diameter of Dv10 of 5 µm, Dv50 of 31 µm, and Dv90 of 121 µm and micronized soy flour (SF2) with a diameter of Dv10 of 15 µm, Dv50 of 43 µm, and Dv90 of 115 µm.

A laboratory grinder from Retsch model ZM 200 was used for grinding. This equipment allows to get well-defined granulometry profile characterized by the Dv(50) value (size in microns that splits the distribution with half above and half below this diameter, in volume; in other words, Dv50 is the median particle size by volume).

A ring sieve with 80 µm openings and mill speed of 18000 rpm were the conditions used to obtain the target particle size distribution d50 of about 30 µm.

The heat-treated sunflower meal (HT-SM) was prepared from SM which was heat treated at 150°C during 30 min in dry conditions.

Another grade of soy flour (from hexane extracted soy beans) was also investigated. The soy flour SF1 already micronized was the commercially available soy flour grade 7B purchased from ADM and used as received. The particle size was evaluated and found to have a diameter of Dv10 of 5 µm, Dv50 of 25 µm, and Dv90 of 127 µm.

The micronized pea, sunflower, rapeseed and soy flours have a starch content of 51.7% wt/wt, 3.9% wt/wt, 6.3% wt/wt and 5.7% wt/wt, respectively. Starch content was measured after amylolysis and by HPAEC analyses. Glucose released from starch (after amylolysis) was quantified in HPAEC-PAD (ICS-3000, Thermo Scientific Dionex) using a CarboPac PA1 column (2 mm × 250 mm, Thermo Scientific, USA), thermostated at 25°C. An isocratic elution of 500 mM of NaOH was used at a flow rate 0.25 mL.min⁻¹. Rhamnose was used as an internal standard for calibration

Total crude proteins content of PF, SM, RM, SF1 and SF2 obtained using Kjeldahl procedure (NF EN ISO 5983-2 : 2009) with a nitrogen-to-protein conversion factor of 6.25 was 19.0% ± 1.6 % wt/wt, 37.0 % ± 2.3 % wt/wt, 34.0 % wt/wt ± 1.9 % wt/wt, 51.2% ± 2.0 % wt/wt and 48.0% ± 1.4 % wt/wt, respectively.

The total oil content of PF, SM, RM, SF1 and SF2 was respectively 1.2% wt/wt; 1.2% wt/wt; 1.4% wt/w; 0.74% wt/wt and 2.0% wt/wt. The oil contents were measured as follows: oil was extracted with a Soxhlet extractor using n-hexane as solvent. Thereafter, the hexane was separated from oil by using a rotary evaporator at 68°C.

The moisture content of PF, SM, RM, SF1 and SF2 was respectively 7.7% wt/wt, 6.0% wt/wt, 5.0% wt/wt, 4.5% wt/wt and 6.3% wt/wt. The moisture contents were determined by placing about 1.5 g of material in an aluminum cup, the exact weight being measured with an analytical balance with 4 digits after the decimal point. Then the cup is placed in a fan ventilated oven at 105°C for 3h. Fan & valve aperture are set at 100% to accelerate water evaporation. The cup is weighted immediately after being removed from the oven or after conditioning in a desiccator to get sample at room temperature. Moisture content is obtained by calculating the percentage of material loss of the cup before being placed in the oven and after being placed in the oven.

Crude vegetable glycerine with a glycerol content of about 85% wt/wt was provided by Oleon (France) and used as a diluent.

The polyamidoamine-epichlorohydrin was from Ashland Water Technologies (PAE CA 1920, Wilmington, Delaware) and used as received. The PAE CA 1920 is under the form of an aqueous solution with a polymer solid content of 20% wt/wt.

Wood particles used to prepare particle boards were recycled wood (i.e. a mixture of wood from different sources) supplied by LINEX PANNEAUX (France). The wood particles were dried in an oven in order to obtain a total humidity of around 4% and stored in a closed box before being used. For gluing veneers, NEXT MDF coniferous boards were used and supplied by Panneaux de Corrèze (France). The NEXT MDF boards having a thickness of 19 mm and density of 730 Kg/m³ were cut in order to have specimen with dimensions of 20 cm X 20 cm. Wood veneer was oak with dimensions of 20 cm X 20 cm (length) and 0.06 cm thickness.

Urea-formaldehyde (UF) resin and hardener used to glue the veneers were respectively ADHESIVE 1274 and HARDENER 2505 purchased from AKZONOBEL.

### Product characterization

### Particle size determination

The particle size of ground samples is measured using a Malvern laser granulometer Mastersizer 3000. Sample material is injected through the dry injection tool of the analyzer. Refractive index and model used are respectively 1.52 and Mie to determine the particle size density profile.

### Rheoloaical analysis

The rheological properties of adhesive formulations were determined by using a Hakke Rheometer (MARSIII, Thermo, Germany). The prepared adhesive samples were placed between parallel plates, and then the shear stress and apparent viscosity under shear rate of 10 s⁻¹ were tested at 20°C.

Rheological analysis was performed on dispersions prepared from PF, SM, RM, HT-SM, SF1 (see Example 2). Typically, different amounts of micronized plant based raw materials (from 10% wt/wt to 45% wt/wt of solid) were dispersed into water at ambient temperature. After 10min of homogenization, the viscosity was recorded.

To highlight the rheological properties depending on the plant-based source, rheological analysis was also performed on different adhesives compositions (see Example 5, Table 1).

### Panel boards characterization

Particles boards (600 mm × 600 mm) are cut to get samples for, internal bond (IB) and flexural tests. Flexuraland IB tests are done respectively following standard ISO EN 310:1993 and ISO EN 319:1993 to get Modulus of Rupture (MOR), Modulus of Elasticity (MOE) and IB. Apparatus used for all these measurements is the Imal (Italia), IBX700 model. The test results are mean values with their standard deviation.

To evaluate the MOE and MOR, four test specimens with nominal dimensions of 400 mm × 50 mm × 11.5 mm were cut from the particle boards. The MOE and MOR were determined by a static, three point bending test and the values were calculated and recorded for each specimen.

To determine the internal bond strength, six test specimens with nominal dimensions of 50.0 mm × 50.0 mm × 11.5 mm were cut from test panels for each condition. The IB was calculated and recorded after each specimen was tested to failure.

### Veneered boards characterization

Dry strength tests were conducted by delamination test. Delamination was estimated when a failure occurred between the veneer strips and the MDF board after tearing using a cutter. For wet strength tests, the boards were soaked in water for 10 min at 20°C. Wet strength was tested immediately after soaking using a cutter. All board specimens were inspected to see whether they were delaminated after soaking.

When the specimen has not delaminated, Pass (P) was specified, and when a delamination was noticed, Fail (F) was specified.

To evaluate the dry bonding strength, Surface Soundness measurements were conducted according to European Standard EN 311:2002. First of all, each wood assembly was cut into five pieces with dimensions of 50 mm X 50 mm, then a circular groove (inner diameter of 35 mm) is cut 0.3 mm deep into the test samples. A steel pad was glued onto the board surface, on the cut surface portion. After the adhesive has hardened, a tensile force was applied at constant speed so that failure occurs, preferably within the surface layer; the force at failure was recorded.

### Example 2: Viscosity of micronized plant seed resource based dispersions depending on their solid content

An adhesive composition is aimed to have a high solid content to avoid issues during pressing time at high temperature and high pressure (to prevent the blowout due to an excess of water); but limitation of water to prepare the adhesive composition can lead to a too viscous adhesive resulting in an issue during the process of injection into the wood particles. Consequently, choosing an appropriate raw material is very important to overcome both issues.

Dispersions were prepared by mixing micronized plant seed resources (pea flour, PF; sunflower meal, SM; heat treated sunflower meal, HT-SM; soy flour, SF1 and rapeseed meal, RM) into water.

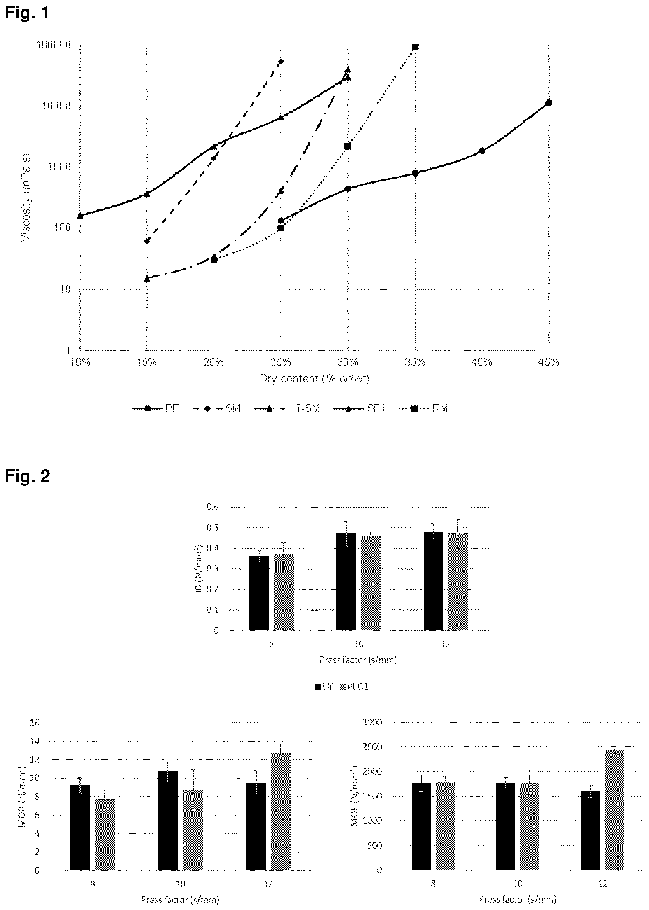

The viscosity of the dispersions was evaluated according to the solid content of the raw materials into water and the results were compared (Figure 1).

Dispersions prepared from raw materials such as soy flour SF1 and sunflower meal SM exhibited the highest viscosity. Their viscosity increased dramatically when the solid content was higher than 20% wt/wt of solid matter into water reaching to very thick dispersions (above 10000 mPa.s).

The viscosity of the heat treated sunflower meal (HT-SM) and of the rapeseed meal (RM) dispersions were better than that of SF1 and SM but increased dramatically for solid contents above 25%.

However, when PF was used, the viscosity was low (inferior to or around 1000 mPa.s) even at solid content equal to 35% wt/wt.

### Example 3: Preparation of particle boards

### Adhesive composition comprising pea flour

An adhesive composition for wood panels was prepared by dispersing PF into a liquid mixture made from PAE solution, crude vegetable glycerin and water. The composition of the adhesive composition was calculated based on the whole adhesive composition including the moisture.

A liquid solution was first prepared by dissolving 285 g of PAE solution and 250 g of crude vegetable glycerin used as biobased diluent and crosslinking agent into 235 g of water. 225 g of micronized pea flour was then added to the mixture and the pH of the solution was adjusted to 8 with a 10M NaOH solution. As the PAE is provided under the form of an aqueous solution (see Example 1), the weight ratio micronized pea flour / PAE is 3.6 (dry weight / dry weight).

The dispersion was mixed until formation of a homogeneous mixture in order to obtain a PF adhesive (PF_{G1}) with a dry (or solid) content of 48.7% wt/wt.

### Adhesive compositions comprising soy flour

Same procedure was used to prepare adhesive compositions from two grades of soy flour, except that micronized pea flour was replaced with micronized soy flour SF1 or SF2. The dry content of the final adhesive compositions was kept at 48.7% wt/wt.

### Preparation of particle boards

The adhesive performances of PF_{G1} adhesive composition were compared to those of SF1 and SF2 adhesive compositions at lab scale. Typically, the pre-dried wood particles from LINEX PANNEAUX (as described in Example 1) were put into a 20 L stirring bowl. Then the adhesive composition was added to the wood particles. The amount of PF_{G1} adhesive composition or SF1 and SF2 adhesive compositions, based on the solid content, was calculated to be 6.8% wt/wt (corresponding to 0.8 wt% of PAE, on a dry weight basis) based on pre-dried wood particles. The glued wood particles were mixed during 5 min and the mats were formed using a forming box size of 20 cm X 20 cm.

The mats were then cold pressed by hand before being placed into a heating press at 180°C, for 144, 180 or 300 seconds corresponding to press time of 12, 15 or 25 s/mm respectively at pressure of 15 metric tons (MeT) using a CARVER hot press (platen of 20 cm X 20 cm) in order to obtain target boards of 12 mm thickness with a density of 650 kg/m³.

The adhesive performances of PF_{G1} were also compared to those of UF resin at pilot scale on particle boards. Typically, 6.8 wt% of PF_{G1} adhesive composition (based on solid content) was first injected onto wood particles from Linex into a particle blender (Imal, Lab Glue Blender 300) using a spray nozzle and the glued wood particles were mixed during 5 min. The impregnated particles were then weighted in order to achieve an approximately board density of 650 kg/m³. Forming box size was 600 mm × 600 mm to make the mat. After wood/adhesive sample addition, the mat was cold pressed by hand. The mat was then placed into a heating press from Imal (Italia) (platen of 1000 mm × 1000 mm) and pressed to a thickness of 16 mm and cured at 210°C at different press times of 8, 10 and 12 s/mm (i.e. 96, 120 and 144 seconds). After pressing, the boards were placed in a conditioning room at 20°C and 65% r.h. (relative humidity) for at least three days. Same procedure was used to prepare particle boards with UF used as reference. UF solution was prepared by mixing UF solution with a hardener. The amount of UF and the hardener, based on the solid content, was calculated to be 6.6% wt/wt and 0.36% wt/wt, respectively based on pre-dried wood particles.

### Example 4: Preparation of decorative veneered MDF boards

### Adhesive composition comprising pea flour

An adhesive composition for wood veneer application was prepared by blending PF with PAE solution. The composition of the adhesive composition was calculated based on the whole adhesive composition including the moisture.

400 g of micronized pea flour was first dispersed into 230 g of water. 375 g of PAE solution was then added to the dispersion. pH of the solution was adjusted to 8 with a 10M NaOH solution and the whole solution was mixed until obtaining an homogeneous mixture.

As the PAE is provided under the form of an aqueous solution (see Example 1), the weight ratio micronized pea flour / PAE is 4.9 (dry weight / dry weight).

The adhesive composition named PF_{G2} with a solid content of 40.0% wt/wt had a viscosity of 1022 mPa.s.

### Veneer preparation

The veneers were glued on pre-cut NEXT MDF boards (as described in Example 1).

Using a paint roller, the adhesive composition was applied to one of the surfaces of the MDF board and then a wood veneer strip of dimensions of 20 cm X 20 cm was applied onto the glued MDF surface. Then the adhesive composition was applied onto the second surface of the MDF board and another wood veneer strip of dimension of 20 cm X 20 cm was applied onto the glued MDF surface.

The total amount of adhesive composition was calculated to be 87.5 g/m² onto each surface. The coated wood veneer strips were then glued by hot-pressing (CARVER Heated Press) at 110°C for different times at a pressure of 80 N/cm².

Same procedure was done with UF resin used as reference. A mixture of UF resin and hardener, 85% and 15%, respectively was first prepared and then 87.5 g/m² of the mixture was applied onto each surface of NEXT MDF boards. The veneer strips were then hot-pressed for different times at 110°C and at a pressure of 80 N/cm².

Two boards were produced for each test condition.

After pressing, these glued specimens were allowed to cool and set aside for conditioning at 20°C and relative humidity (60%) for 3 days before further experiments.

### Example 5: Particle board properties

### Particle boards prepared with pea flour adhesive

The mechanical properties of the particle boards prepared from the PF_{G1} adhesive in Example 3 were evaluated at different press factors and compared with that obtained with a UF resin used as a reference (Figure 2). The internal bond (IB) of boards prepared with PF_{G1} exhibited the same value as that of the boards prepared from UF resin at press factors of 8, 10 and 12 s/mm, showing that the PF_{G1} adhesive had a very fast curing time. The modulus of rupture (MOR) and the modulus of elasticity (MOE) of the PF_{G1} adhesive were comparable to the values obtained with UF resin and were higher at a press factor of 12 s/mm.

These results show the good adhesive performances of the biobased adhesive PF_{G1}.

### Comparison of particle boards prepared with pea flour adhesive with boards prepared from soy flour adhesives

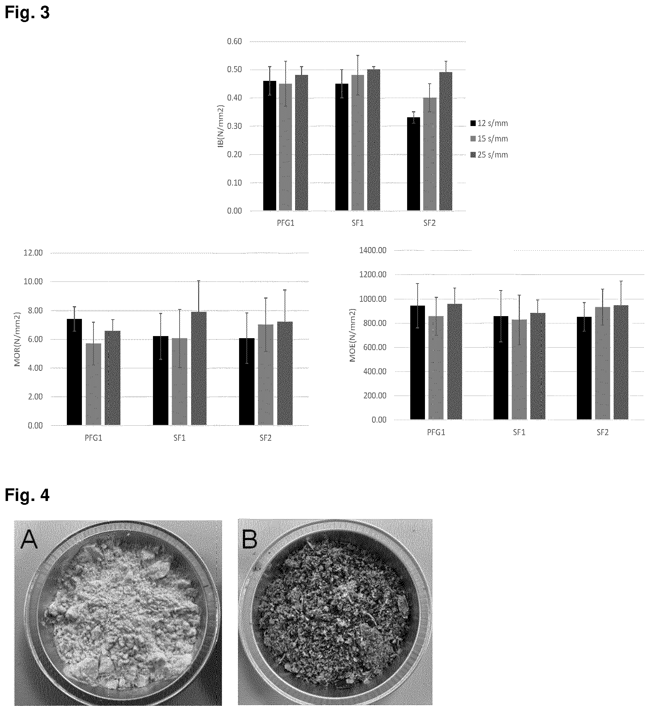

Adhesive performances of the PF_{G1} adhesive prepared from pea flour were compared to adhesive compositions prepared from soy flour (Figure 3). Two grades of soy flour were evaluated (SF1 and SF2). The mechanical properties (IB, MOR and MOE) of the particle boards were evaluated according to the procedure set forth in Example 1.

The internal bond of the particle boards prepared from PF_{G1} adhesive at a press factor of 12 s/mm was identical to that of SF1 adhesive and higher than that of SF2 adhesive. The MOE and MOR of boards prepared with the PF_{G1} adhesive at a press factor of 12 s/mm were higher than the flexural moduli (MOE and MOR) of SF1 and SF2 adhesives.

Even if good mechanical properties were obtained with the soy flour-based adhesives, the use of this raw material has several limitations due to its very high viscosity. At same solid content of 48,7%, the viscosity of SF1 and SF2 adhesive compositions was respectively 2775 mPa.s and 3277 mPa.s while the limiting viscosity to be injected throughout nozzles was found to be around 1000 mPa.s (Table 1).

Increasing water amount to prepare SF1 and SF2 adhesive compositions however leads to an excess of water after resination (over 20% wt/wt of humidity, measured with a moisture analyzer).

Consequently, only the PF adhesive is a valuable raw material to prepare processable composition having good adhesive performances. Its viscosity was 828 mPa.s and the humidity of glued wood particles was below 11% wt/wt (moisture analyzer).

**Table 1: Viscosity of PF_{G1}, and compositions prepared from SF1 and SF2**

| | Viscosity (mPa.s) |
|---|---|
| PF_{G1} | 828 |
| SF1 | 2775 |
| SF2 | 3277 |

### Example 6: Decorative veneered MDF board properties

The adhesive performances of PF_{G2} adhesive on veneered boards prepared according to Example 4 are shown in Table 3. The bonding performances and water resistance were conducted by monitoring the delamination in dry or soak conditions. Good performances were expected when the specimen did not failed after delamination. The mechanical properties (delamination before and after immersion into water and surface soundness) of the boards were evaluated according to the procedure set forth in Example 1.

The test was performed on oak strip veneered MDF boards prepared with different pressing times using UF resin (Table 2) or PF_{G2} adhesive (Table 3). All results are compared with UF reference.

Table 3 shows good bonding performances and water resistance of the PF_{G2} adhesive; good adhesion in dry and wet conditions were obtained even at low pressing time of 15 seconds (very closed to the UF reference).

The surface soundness of the veneered MDF boards was also evaluated. The values of boards laminated with oak veneer strip at a pressing time of 15 seconds where respectively 1.29% for the PF_{G2} and 1.43% for the UF resin. These values were similar between the PF_{G2} adhesive and the UF resin.

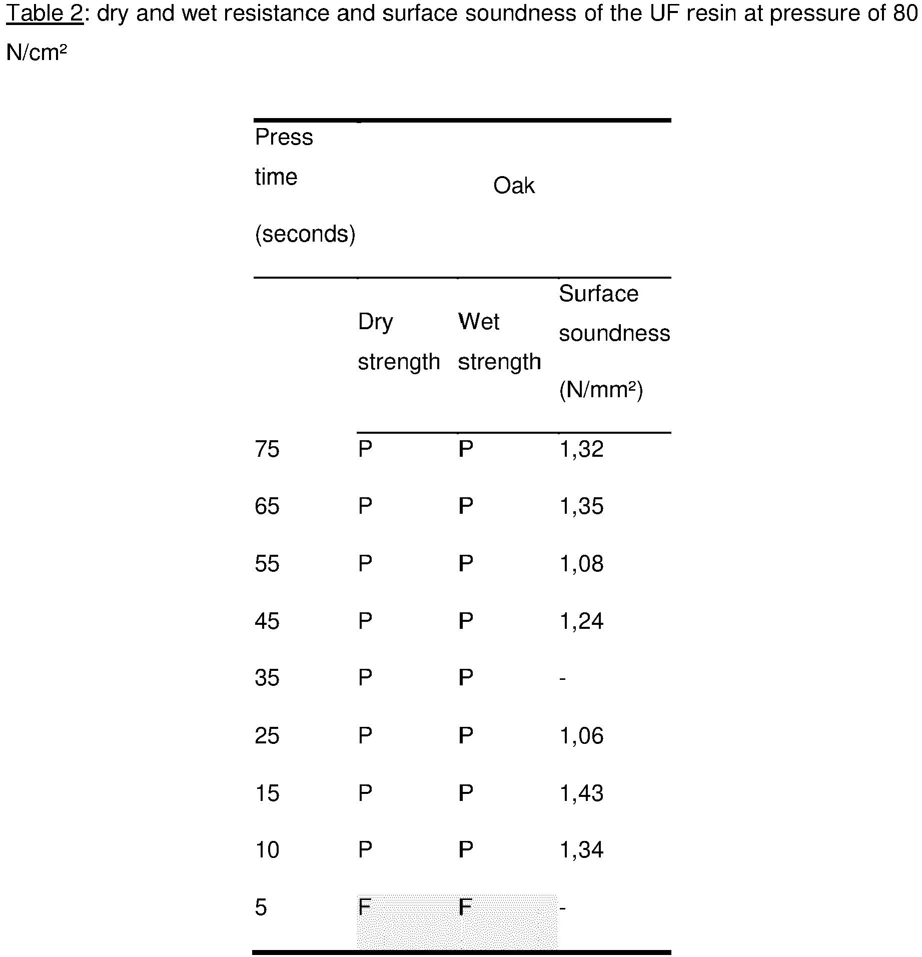

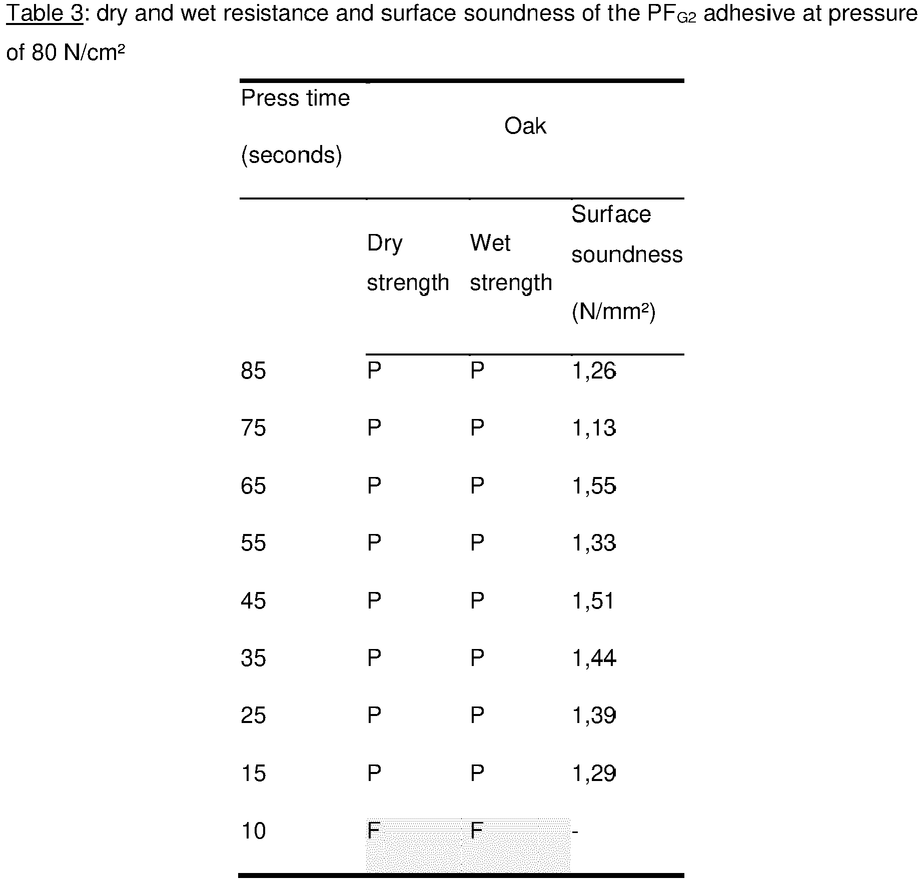

### Example 7: Comparison of physicochemical properties of pea flour with others native seeds

Yellow peas used in these examples are whole seeds that have not undergone pretreatment or other process of preparation (such as seed crushing) contrary to others vegetable raw materials usually selected to prepared biobased adhesive compositions. To confirm the interest of pea flour versus others native grains or plants, additional analysis was conducted on sunflower seeds. Their physicochemical properties were characterized and compared to pea flour.

To evaluate the properties of sunflower seeds, the first step consisted in micronization to obtain a particle size Dv10 of 206 µm, Dv50 of 387 µm and Dv90 of 654 µm. However, the grinding of sunflower seeds was not possible due to an excess of oil amount (41.6% wt/wt) which clogged the grinder. Only agglomerates were obtained with sunflower seeds (Figure 4B) instead of a homogeneous powder such as the powder obtained after grinding pea seeds (Figure 4A). Due to this limitation, sunflower seeds cannot be used to produce liquid formulation.

### Example 8: Water resistance of plywood panels

### Preparation of 5-Ply and 7-ply Plywood Panels

The PF_{G2} adhesive was applied to both sides of a veneer [20 cm × 20 cm] using an adhesive roller-coater. The targeted glue spread rate was 150 g/cm² by face (total adhesive). 5-ply panels or -ply panels were made in such a way that the adhesive-coated veneer was stacked between two uncoated veneers with the grain directions of two neighboring veneers perpendicular to each other. The final thickness of the 5-layer and 7-layer plywood panels was 12 mm and 22 mm, respectively. Experiments were conducted on polar wood (to produce the 5-layer and 7-layer plywood) and okoume wood (to produce the 5-layer plywood).

After gluing step, the stacked veneers were hot-pressed at 1.88 Kg/cm² and 110°C using a CARVER hot press (platen of 20 cm X 20 cm) for 9 min (to produce the 5-layer plywood) or for 18 min (to produce the 7-layer plywood). Same procedure was conducted using MUF resin. 5-ply panels from polar wood and okoume wood were made with glue spread rate of 150 g/cm² by face. The stacked veneers were hot-pressed at 1.88 Kg/cm² and 110°C for 9 min (to produce the 5-layer plywood) or for 18 min (to produce the 7-layer plywood). The panels made from PF_{G2} and from MUF adhesives were stored at ambient temperature for at least 48h before being cut and evaluated for their water resistance.

### Water Resistance of Plywood Panels

The water resistance of plywood panels was determined by a three-cycle soak based on the following procedures from the American National Standard for Hardwood and Decorative Plywood-2004 (ANSI/HPVA HP-1-2004). Three specimens (127mm × 50.0 mm) from each 5-ply or 7-ply plywood panels (produced from PF_{G2} and from MUF adhesives) were used for the three-cycle soak test. Plywood specimens were soaked in water at 24°C for 4h and then dried at 50°C for 19h with sufficient air circulation. The criteria for interior application as described in the standard is that 95% of the specimens should not delaminate after the first soaking/drying cycle, and 85% of specimens (i.e., 2 out of 3 specimens) should not delaminate after the third soaking/drying cycle.

### Results

The water-resistance of plywood bonded with the PF_{G2} and MUF adhesives is shown in Table 4. Results shown revealed that plywood panels bonded with the PF_{G2} adhesive all passed the three-cycle soak test and no specimens delaminated for all conditions (5-ply and 7-ply with poplar and okoume woods).

**Table 4 : water resistance of plywood panels bonded with PF_{G2} of MUF adhesives**

| Adhesive | Wood type | Number of plies | Number of specimens that passed the three cycle soak test/total specimen | | Pass or Fail |
|---|---|---|---|---|---|
| | | | 1st cycle | 3rd cycle | P |
| PF_{G2} | Poplar | 5 | 3/3 | 3/3 | P |
| | Poplar | 7 | 3/3 | 3/3 | P |
| | Okoume | 5 | 3/3 | 3/3 | P |
| MUF | Poplar | 5 | 3/3 | 3/3 | P |
| | Poplar | 7 | 3/3 | 3/3 | P |
| | Okoume | 5 | 3/3 | 3/3 | P |

## Claims

1. Adhesive composition comprising:
- ground pea seeds,
- an amine-based azetidinium-functional cross-linker, and
- water.

2. Adhesive composition according to claim 1, wherein the ground pea seeds belong to the genus *Pisum* and/or *Lathyrus.*

3. Adhesive composition according to claim 2, wherein the ground pea seeds belong to the species *Pisum sativum.*

4. Adhesive composition according to any one of claims 1 to 3, wherein the amine-based azetidinium-functional cross-linker is polyamidoamine-epichlorohydrin (PAE), polyalkylenepolyamine-epichlorohydrin (PAPAE), amine polymer-epichlorohydrin (APE), or a combination thereof, preferably PAE.

5. Adhesive composition according to any one of claims 1 to 4, comprising between 5 wt% and 60 wt% of the ground pea seeds, based on the total weight of the adhesive composition.

6. Adhesive composition according to any one of claims 1 to 5, comprising between 2 wt% and 12 wt% of the amine-based azetidinium-functional cross-linker, based on the total weight of the adhesive composition.

7. Adhesive composition according to any one of claims 1 to 6, having a solid content of at least 20 wt%, based on the total weight of the adhesive composition.

8. Adhesive composition according to any one of claims 1 to 7, further comprising a polyol, preferably a trifunctional alcohol.

9. Adhesive composition according to claim 8, wherein the polyol is glycerol or crude vegetable glycerin.

10. Adhesive composition according to any one of claims 1 to 9, further comprising at least one additive.

11. Article comprising the adhesive composition according to any one of claims 1 to 10 and a lignocellulosic material.

12. Process for preparing the article according to claim 11, comprising a step of contacting the adhesive composition according to any one of claims 1 to 10 with a lignocellulosic material to provide lignocellulosic material impregnated with the adhesive composition.

13. Use of the adhesive composition according to any one of claims 1-10 to prepare an article comprising a lignocellulosic material.

14. Use of the adhesive composition according to any one of claims 1-10 to glue wood veneer.

15. Use of ground pea seeds for improving processability of an adhesive composition comprising an amine-based azetidinium-functional cross-linker.
